# EUROPÄISCHE PATENTSCHRIFT

(11) **EP 1 172 951 B1**
(45) Veröffentlichungstag und Bekanntmachung des Hinweises auf die Patenterteilung: **12.04.2006**
(21) Anmeldenummer: 01114434.2
(22) Anmeldetag: 15.06.2001
(51) Int. Cl.: H04B 15/02, H04B 1/10, H03L 1/00

(54) **Hochfrequenzgerät mit Störstrahlkompensation**
Radio frequency apparatus with interference compensation
Appareil radiofréquence avec compensation d'interférences

(30) Priorität: 12.07.2000 DE 10033714
(43) Veröffentlichungstag der Anmeldung: 16.01.2002
(73) Patentinhaber: Hirschmann Electronics GmbH & Co. KG, 72654 Neckartenzlingen (DE)
(72) Erfinder: Wendel, Wolfgang, 73257 Köngen (DE)
(74) Vertreter: Thul, Hermann

(56) Entgegenhaltungen:
- EP-A- 0 338 125
- GB-A- 2 273 230
- GB-A- 2 291 725

## Beschreibung

Die Erfindung betrifft ein Hochfrequenzgerät (HF-Gerät) mit wenigstens zwei Störstrahlungsquellen.
Geräte dieser Art sind von allen zur Übertragung und/oder Verarbeitung von HF-Signalen eingesetzten passiven und aktiven Einrichtungen wie etwa den so genannten Network-Terminal-Units (NTU) und dabei insbesondere Antennensteckdosen, Verteilern, Abzweigern und Verstärkern bekannt. Als Störstrahlungsquellen kommen insbesondere Steck- und Klemmverbinder für den Anschluss von Teilnehmern und Kabeln sowie Öffnungen von Metallgehäusen in Betracht.
Die stärkste Störstrahlung geht dabei von leer laufenden Anschlüssen aus, aber auch mit dem Wellenwiderstand abgeschlossene Anschlüsse weisen eine, gegebenenfalls in Summe nicht unerhebliche Störstrahlung auf.

Mit zunehmender Erweiterung der Nutzungsmöglichkeiten von HF-Geräten, beispielsweise durch Multimedia-Anwendungen werden immer höhere Anforderungen an deren Störstrahlungsdichtigkeit gestellt. So müssen etwa Telekommunikationsgeräte mit dem Gütezeichen "Klasse A" ein Schirmungsmaß von > 85 dB bis 300 MHz, > 75 dB von 300-470 MHz, > 65 dB von 470 MHz bis 1GHz und > 55 dB von 1 bis 3 GHz einhalten.
Diese hohen Werte sind durch vollständig geschlossene Schirmungsgehäuse mit nicht offenen koaxialen Steckanschlüssen ohne weiteres erreichbar. Solche Ausführungen sind jedoch bei Verwendung als Endverbrauchergeräte, also z.B. in Rundfunk- und Fernsehteilnehmer-Verteilnetzen, zu aufwendig und teuer. Nicht belegte Steckanschlüsse müssen darüber hinaus HF-dicht verschlossen oder mit Abschlusswiderständen versehen werden, wofür ein zusätzlicher Aufwand erforderlich ist.

Das angeführte Schirmungsmaß für die einzelnen Frequenzbereiche ist auch bei nicht gekapselten HF-Geräten mit außen liegenden Kabelanschlüssen erreichbar, wenn entsprechende mechanische und elektrische Maßnahmen getroffen werden. Dies sind insbesondere die Anordnung in Gehäusen mit Schirmwirkung, die Mehrfachkontaktierung von Masseklemmschellen zur Klemmkontaktierung der Außenleiter von Koaxialkabeln, die metallische Umhüllung bzw. Überdachung von Innenleiter-Klemmkontakten, die Vermeidung von nicht dem Kabelanschluss dienenden Öffnungen in Metallgehäusen und das wellenwiderstandsrichtige Abschließen nicht benutzter Teilnehmeranschlüsse.
Eine nach diesen Kriterien ausgeführte Antennensteckdose weit z. B. als "Klasse A"-Gerät bei mit 75 Ω abgeschlossenen Anschlüssen ein Schirmungsmaß von etwa 85 dB bis zu 300 MHz auf. Ist dagegen ein Teilnehmeranschluss nicht abgeschlossen, so beträgt dieses nur noch ca. 50 - 60 dB und weist damit eine erhebliche Störstrahlung auf. Es wurde bereits versucht, durch mechanische Konstruktionen wie etwa metallischen Deckeln oder Kurzschlusseinrichtungen zur Verbindung von Kabelaußen- und -innenleitern die Störsignalabstrahlung nicht abgeschlossener Teilnehmeranschlüsse von in Gemeinschafts- und Kabelfernsehanlagen eingesetzten HF-Geräten zu verhindern. Diese Lösungen haben sich in der Praxis jedoch nicht bewährt, weil sie zu teuer waren und/oder keine sichere Kontaktgabe gewährleistet haben. Die GB-A-2 291 725 zeigt zwar ein Hochfrequenzgerät und zwei Störstrahlungsquellen, wobei der Träger mit 180° Phasenunterschied zugeführt wird. Hierzu ist ein Phasendrehglied vorgesehen, das in der Mitte des Frequenzbereiches den Träger um 180° dreht. Allerdings ist hier das Phasendrehglied schmalbandig.

Der Erfindung liegt daher die Aufgabe zugrunde, ein HF-Gerät der eingangs genannten Art zu schaffen, bei dem auch ohne geschlossenes Metallgehäuse oder mechanische Zusatzteile und auch bei nicht oder nur teilweise wellenwiderstandsrichtig abgeschlossenen Anschlüssen eine wesentliche Verbesserung des Schirmungsmaßes erreicht ist.

Diese Aufgabe ist durch die kennzeichnenden Merkmale des Anspruchs 1 gelöst. Die Lösung beruht auf dem Grundgedanken, Störsignale durch wenigstens in etwa gegenphasige Signale zumindest teilweise im Fernfeld zu kompensieren und damit die Störstrahlungsleistung insgesamt zu reduzieren. Die Störstrahlungsquellen können hierbei als punktförmig angesehen werden, da ihr gegenseitiger Abstand im Verhältnis zur Betriebswellenlänge klein ist. Handelt es sich bei den Störstrahlungs quellen um Teilnehmeranschlüsse, so ist für die Teilnehmer die Phasendrehung der Signale ohne Bedeutung, weil jeder Anschluss getrennt genutzt wird. Auf diese Weise sind aufwendige mechanische Maßnahmen und Abschlusswiderstände für nicht belegte Anschlüsse nicht mehr erforderlich, sodass die HF-Geräte erheblich kostengünstiger herstell- und einsetzbar sind.

Störstrahlungsquellen können z.B. offene Anschlussklemmen für Koaxialkabel sein, deren Störstrahlung durch Strahlungsquellen mit 180° Phasenunterschied kompensiert werden, wodurch auch eine Unterdrückung von Mantelwellen auf den Koaxialkabeln erreicht wird. Solche Störstrahlungsquellen können z.B. Ausnehmungen in einem Metallgehäuse des HF-Gerätes sein, durch die hindurch sie wirksam sind. Den breitesten Anwendungsbereich bilden jedoch die (normalerweise koaxialen) Anschlüsse von Hochfrequenzgeräten, z.B. Teilnehmeranschlussbuchsen von Antennensteckdosen oder Verteilern. Dabei gibt es eine Vielzahl möglicher Varianten:
Die HF-Leistung kann gleichmäßig oder ungleichmäßig auf die Anschlüsse aufgeteilt sein, die Verbindungsleiter zu den Anschlüssen können kurz oder lang und selbstverständlich auch unterschiedlich lang sein, die Anschlüsse können leer laufen oder abgeschlossen sein und schließlich werden in der Praxis die verschiedensten Kombinationen dieser genannten Eigenschaften eingesetzt.
In den meisten dieser Fälle, insbesondere bei leer laufenden Anschlüssen, ist durch die kennzeichnenden Merkmale des Anspruches 1 mit verhältnismäßig geringem Aufwand eine deutliche Verringerung der abgestrahlten Störstrahlung erreichbar. Die erfindungsgemäße Phasenkompensation ist aber auch dann von Vorteil, wenn alle Anschlüsse mit dem Wellenwiderstand abgeschlossen sind und dabei nur noch eine Reststörstrahlung abgeben. Denn zumeist wird beim Stand der Technik das für "Klasse A"-Geräte geforderte Schirmungsmaß von 85 dB nur knapp erreicht, durch eine erfindungsgemäße Reduzierung der Reststörstrahlung jedoch deutlich (um bis zu etwa 10 dB) übertroffen. Diese Wirkung ist noch verstärkt (bis zu etwa 20 dB), wenn bei einem nicht abgeschlossenen Teilnehmeranschluss das Schirmungsmaß wie bereits angeführt nur ca. 50-60 dB beträgt.

In den Unteransprüchen sind vorteilhafte Ausgestaltungen bzw. Weiterbildungen des HF-Gerätes nach Anspruch 1 angegeben.

So ist es durch eine Ausführung des Phasendrehgliedes nach Anspruch 2 möglich, das HF-Gerät für unterschiedliche Anwendungsfälle einzusetzen, in denen die für die Kompensation benötigte Phasendrehung verschiedene Werte (zumeist < 180°) aufweist.

Eine maximale Reduzierung der Störstrahlung durch Phasenkompensation ist bei einem HF-Gerät gemäß Anspruch 3 erreichbar, weil zwischen dem Phasendrehglied und den Anschlüssen keine nennenswerte Phasendrehung auftritt, sodass mit einem 180°-Phasendrehglied die Phase des Störstrahlungsvektors der einen Störstrahlungsquelle um 180° gegenüber der Phase jedes Störstrahlungsvektors der übrigen Störstrahlungsquellen verschoben und damit die Phasenkompensationsbedingung gemäß Anspruch 1 sicher erfüllt ist. Darüber hinaus ist dieser Aufbau einfach und kostengünstig, weil nur ein Phasendrehglied benötigt wird und 180°-Phasendreh-glieder kostengünstig realisierbar sind.
Außerdem ist mit dieser Ausführung, besonders bei Frequenzen < 300MHz, ein großes Spektrum relevanter HF-Geräte abzudecken, bei denen aufgrund der räumlichen Abmessungen im Verhältnis zur Betriebswellenlänge ausreichend kleine Abstände gegeben sind, so z.B. Antennensteckdosen, -verteiler und -abzweiger.

Eine absolute Minimierung der Störstrahlung ist erreichbar, wenn außer der Phasenkompensation auch die in Anspruch 4 angeführte Amplitudenbedingung erfüllt ist. Diese kann, je nach den Gegebenheiten des Anwendungsfalles, auf unterschiedliche Wiese realisiert werden, etwa durch ungleichmäßige Verteilung der HF-Leistung auf die Anschlüsse oder durch Einschalten von Verstärkern und/oder Dämpfungsgliedem. Besonders kostengünstig ist es, wenn nach Anspruch 5 ein bereits für andere Zwecke im HF-Gerät benutztes Bauteil, z.B. ein entsprechender Verstärker, als Phasendrehglied mitbenutzt wird.
Phasendrehglieder können passive oder aktive Bauteile sein. Die in den Ansprüchen 6 und 7 aufgeführten passiven Phasendrehglieder weisen den Vorteil der Breitbandigkeit auf.

Als aktive breitbandige Phasendrehglieder (Anspruch 9) sind Verstärker mit ungerader Stufenzahl oder solche mit zwei in der Phase um 180° versetzten Ausgängen verwendbar (Anspruch 10).
Im Sinne des Anspruches 5 können diese Verstärker vorteilhafterweise auch in bereits für andere Zwecke vorhandenen ASIC's integriert sein.

Die Erfindung wird nachstehend anhand mehrerer Ausführungsbeispiele relevanter HF-Geräte, bei denen eine Phasenkompensation im Frequenzbereich bis etwa 300 MHz erfolgt, in den Figuren erläutert. Es zeigen:
- Fig. 1a-1d:: Je ein Prinzipschaltbild eines Vierfachverteilers in vier unterschiedlichen Ausführungen und
- Fig. 2:: Ein Prinzipschaubild einer Antennen-Durchgangsdose mit zwei breitbandigen Teilnehmeranschlüssen.

Bei allen fünf nachstehend beschriebenen HF-Geräten sind die Verbindungen zwischen den verschiedenen Schaltungspunkten in dem angeführten Betriebsfrequenzbereich so kurz, dass sie keine die Phasenkompensation nennenswert beeinflussenden Phasendrehungen bewirken. Die einzelnen Verbindungsleitungen zu den Anschlüssen müssen daher auch nicht gleich lang sein.

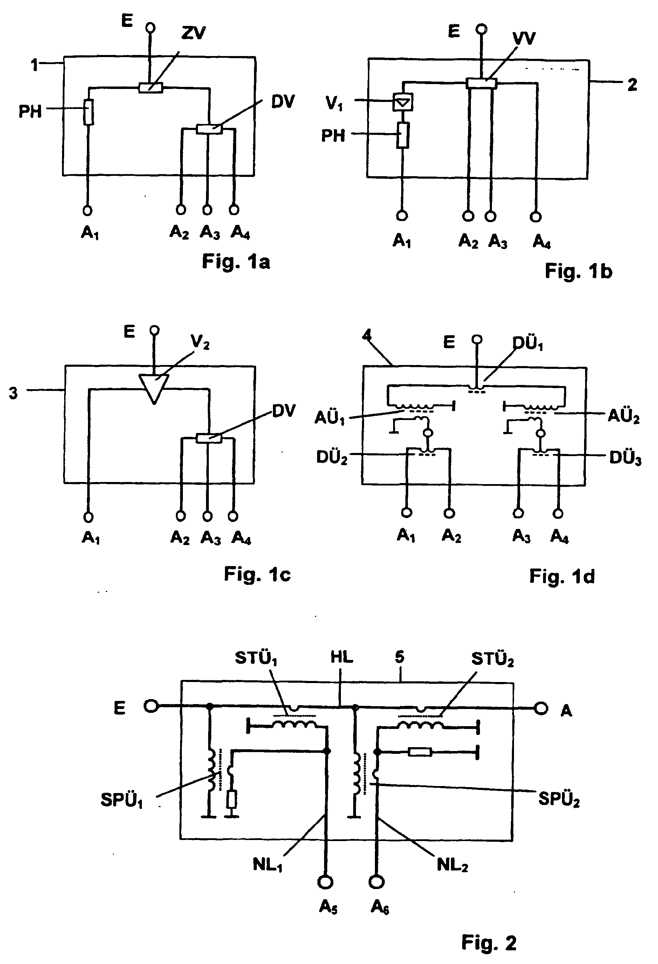

Die in den Figuren 1a-1d dargestellten Vierfachverteiler 1, 2, 3, 4 können z. B. zur Aufteilung der am Eingang E zur Verfügung stehenden HF-Energie auf vier Anschlussstellen A₁, A₂, A₃, A₄ in einer Wohnung, Als Treppenhausverteilung für vier Wohnungen oder auch als Vierfach-Antennenendsteckdose eingesetzt sein.

Bei dem Vierfachverteiler 1 nach Figur 1a wird die HF-Leistung zunächst mittels eines symmetrischen Zweifachverteilers ZV auf zwei Zweige aufgeteilt. In den ersten, zum Anschluss A₁ führenden Zweig ist ein 180°-Phasendrehglied PH eingeschaltet. Der zweite Zweig wird durch einen symmetrischen Dreifachverteiler DV auf drei zu den Anschlüssen A₂,A₃,A₄ führende Leitungen aufgeteilt.
Unter Vernachlässigung der geringen Durchgangsdämpfungen des Phasendrehgliedes PH und des Dreifachverteilers DV steht am Anschluss A₁ die Hälfte und an den Anschlüssen A₂,A₃,A₄ jeweils 1/6 der HF- Eingangsleistung zur Verfügung. Die Phasen der Signale an den Anschlüssen A₂,A₃,A₄ sind jeweils um 180° gegenüber derjenigen des Signals am Anschluss A₁ gedreht. Der resultierende Strahlungsvektor der Anschlüsse A₂,A₃,A₄ ist damit ebenso groß wie der Strahlungsvektor des Anschlusses A₁ aber um 180° phasenversetzt.
Die gleichen Verhältnisse ergeben sich, wenn das Phasendrehglied PH nicht im ersten Zweig, sondern zwischen dem Zweifachverteiler ZV und dem Dreifachverteiler DV eingeschaltet wird.
Damit ist eine theoretisch vollständige Störstrahlungsunterdrückung erreicht, wenn alle Anschlüsse A₁,A₂,A₃,A₄ leer laufen (etwa in einer noch nicht belegten Wohnung) oder mit dem Wellenwiderstand abgeschlossen sind (z.B. durch Anschluss an Teilnehmergeräte wie TV-Empfänger), weil sich dann die Störstrahlungskomponenten der Anschlüsse A₂,A₃,A₄ zu einem resultierenden Störstrahlungsvektor addieren, dessen Amplitude derjenigen des Störstrahlungsvektor am Anschluss 1 entspricht und dessen Phase um 180° gegenüber ihm versetzt ist.
Bei einer Teilbelegung der Anschlüsse ist eine Teilkompensation erreicht und damit im Vergleich zu einem Vierfachverteiler ohne Phasendrehglied eine immer noch nennenswerte Reduzierung der Störstrahlung erzielt.
Als Phasendrehglieder kommen für die Praxis insbesondere breitbandige Schaltungen wie Übertrager, Richtkoppler und Verstärker in Betracht.
Im Vergleich zum Stand der Technik sind dadurch auf einfache Weise wesentliche Vorteile erreicht: Durch die Unterdrückung oder zumindest Verringerung der erheblichen Störstrahlung bei leer laufenden Anschlüssen sind nicht nur Störungen z.B. des Fernsehempfangs in Nachbarwohnungen sondern auch die häufig beklagten Störungen von Funkdiensten, insbesondere des Flugfunks, wirksam vermieden oder wenigstens eingeschränkt. Diese vorteilhafte Wirkung ist selbstverständlich auch umgekehrt bei in HF-Geräte eingestrahlten Störsignalen (beispielsweise von RF- und TV-Sendern oder Funkdiensten) erreicht.
Aber auch die Vermeidung oder Reduzierung von Reststörstrahlung bei abgeschlossenen Anschlüssen, wie sie sowohl an diesen selbst als auch aus daran angeschlossenen undichten Kabeln erfolgen kann, ist von praktischer Bedeutung, weil sie unter Umständen entscheidend dazu beiträgt, dass etwa das bei "Klasse A"-Geräten geforderte Schirmungsmaß von 85 dB nicht nur knapp, sondern sicher erreicht bzw. sogar übertroffen wird.

Bei der in Figur 1b dargestellten Ausführung 2 ist ein symmetrischer Vierfachverteiler W vorgesehen, bei dem drei Ausgänge direkt mit den Anschlüssen A₂,A₃,A₄ verbunden sind und der erste Ausgang über ein Phasendrehglied PH mit dem Anschluss A₁ verbunden ist. Aufgrund der gleichmäßigen Leistungsaufteilung beträgt die Summe der an den Anschlüssen A₂ bis A₄ vorhandenen Teilleistungen das Dreifache der auf den Anschluss A₁ übertragenen Eingangsleistung. Deshalb ist dem Phasendrehglied ein zweistufiger Verstärker V₁ vorgeschaltet, der den Leistungspegel um den Faktor 3 anhebt. Damit ist auch hier eine vollständige Kompensation der Teilstörstrahlungen im Fernfeld erreicht, wenn alle Anschlüsse A₁ bis A₄ offen oder abgeschlossen sind und zumindest eine Reduzierung der Störstrahlung bei teilweiser Belegung der Anschlüsse gewährleistet.
Der gleiche Effekt ist erzielbar, wenn anstelle des Verstärkers V₁ im ersten Zweig entsprechend bemessene Dämpfungsglieder in den drei übrigen Zweigen eingeschaltet werden. Allerdings ist eine solche Ausführung nur sinnvoll, wenn am Eingang ein ausreichend hoher Leistungspegel zur Verfügung steht. In der Regel ist die in Figur 1b dargestellte Lösung demgegenüber vom Aufwand und den Pegelverhältnissen her im Vorteil. Hinzu kommt, dass der Verstärker zugleich für eine hohe Entkopplung sorgt.

Figur 1c zeigt eine in vielen praktischen Fällen realisierbare Ausführung eines Vierfachverteilers 3, bei der ein für andere Zwecke bereits vorhandener Verstärker V₂ mit zwei um 180° phasenversetzten Ausgängen als Phasendrehglied mitbenutzt wird. Der Verstärker V₂ kann selbstverständlich auch Bestandteil eines ASIC sein. Bei dieser Ausführung sind die zu den Vierfachverteilern 1 und 2 bereits genannten Vorteile bzw. Eigenschaften auf eine besonders kostengünstige Weise erreicht, weil kein Phasendrehglied als zusätzliches Bauteil benötigt wird.

Figur 1d zeigt einen aus Breitband-Übertragern aufgebauten Vierfachverteiler 4. Entkopplungswiderstände und andere für die tatsächliche Schaltung erforderliche elektrische Bauelemente sind in dieser Prinzipdarstellung wie auch in den übrigen Figuren nicht dargestellt.
Die HF-Leistung am Eingang E wird durch einen ersten Differentialübertragers DÜ₁ gleichmäßig auf zwei Anpassungsübertrager AÜ₁,AÜ₂ aufgeteilt, deren Ausgangsleistung jeweils durch einen weiteren Differentialübertrager DÜ₂,DÜ₃ auf die Anschlüsse A₁,A₂ sowie A₃,A₄ aufgeteilt wird, sodass an allen Anschlüssen A₁ bis A₄ die gleiche HF-Leistung zur Verfügung steht. Durch den unterschiedlichen Wicklungssinn der Anpassungsübertrager AÜ₁,AÜ₂ ist eine Phasenverschiebung zwischen den Eingängen der Differentialübertrager DÜ₂ und DÜ₃ von 180° gegeben. Dadurch weisen die jeweils phasengleichen HF-Signale an den Anschlüssen A₁,A₂ bzw. A₃,A₄ einen Phasenunterschied von 180° auf.
Auch bei dieser Ausführung ist die volle Kompensationswirkung erreicht, wenn alle Anschlüsse A₁ bis A₄ entweder leer laufen oder wellenwiderstandsrichtig abgeschlossen sind. Für den Fall einer Teilbelegung ist es in diesem Fall zweckdienlich, dem Anwender anzugeben, dass auf die Belegung des Anschlusses A₁ oder A₂ eine Belegung des Anschlusses A₃ oder A₄ (und nicht des Anschlusses A₂ oder A₁) folgen soll, damit der Phasenversatz von 180° auch genutzt wird.

Bei der in Figur 2 dargestellten Antennendurchgangssteckdose in Breitbandtechnik sind zwei hintereinander geschaltete Richtkoppler vorgesehen, die jeweils einen Spannungsübernager SPÜ₁,SPÜ₂ und einen Stromübertrager STÜ₁,STÜ₂ aufweisen, deren Hauptleitungen HL zwischen dem Eingang E und dem Ausgang A die Stammleitung z.B. eines Gemeinschaftsantennen-Verteilnetzes bilden und deren Nebenleitungen NL₁,NL₂ zu den Teilnehmeranschlüssen A₅, A₆ geführt sind, die aufgrund des Wickelsinns der Stromübertrager STÜ₁,STÜ₂ HF-Signale mit einem Phasenversatz von 180° aufweisen. Da auch hier die Signal-Amplituden an den beiden Teilnehmeranschlüsen A₅,A₆ etwa gleich groß sind, ist eine nahezu völlige Vermeidung von Störstrahlung erzielt, wenn beide Anschlüsse entweder belegt oder unbelegt sind. Auch wenn nur ein Anschluss belegt wird, ist durch die Gegenphasigkeit der Störstrahlung an den beiden Teilnehmeranschlüssen A₅,A₆ trotz ihrer großen Amplitudenunterschiede noch eine geringe Kompensationswirkung erreicht, während sich beim Stand der Technik die gleichphasigen Störstrahlungskomponenten beider Anschlüsse addieren.

Anstelle der in den vorstehend beschriebenen Ausführungsbeispielen verwendeten breitbandigen 180°-Phasendrehgliedern können auch λ/2-lange HF-Leitungen eingesetzt werden. Solche Lösungen sind zwar kostengünstiger aber schmalbandig und damit nur in speziellen Anwendungsfällen vorteilhaft. Zum Ausgleich geringer Phasenabweichungen vom Sollwert, wenn etwa die Verbindungen zwischen dem Zweifachverteiler ZV und dem Anschlüssen A₂,A₃,A₄ beim Vierfachverteiler 1 nicht mehr ausreichend klein gegenüber der Wellenlänge sind, kann ein ergänzender Einsatz von Leitungsstücken durchaus sinnvoll sein um den angestrebten Phasenversatz zwischen dem Störstrahlungsvektor am Anschluss A₁ und dem resultierenden Störstrahlungsvektor der restlichen Anschlüssen A₂ bis A₄ zu erreichen.

## Patentansprüche

1. Hochfrequenzgerät (1, 2, 3, 4, 5) mit wenigstens zwei Störstrahlungsquellen (A₁, A₂, A₃, A₄, A₅, A₆)
**dadurch gekennzeichnet, dass** wenigstens ein Phasendrehglied (PH, V₂, AÜ₁/AÜ₂, STÜ₁/STÜ₂) vorgesehen ist, das die Phase des Strahlungsvektors einer Störstrahlungsquelle (A₁, A₅) derart dreht, dass sie in der Mitte eines Betriebsfrequenzbereichs um wenigstens näherungsweise 180° oder ein ungeradzahliges Vielfaches davon gegenüber der Phase des resultierenden Strahlungsvektors der übrigen Störstrahlungsquellen (A₂, A₃, A₄, A₆) verschoben ist und das Phasendrehglied (PH, V₂, AÜ₁/AÜ₂, STÜ₁/STÜ₂) breitbandig ist.

2. Hochfrequenzgerät nach Anspruch 1, **dadurch gekennzeichnet, dass** das wenigstens eine Phasendrehglied einstell- oder regelbar ausgebildet ist.

3. Hochfrequenzgerät nach Anspruch 1, **dadurch gekennzeichnet, dass** das wenigstens eine Phasendrehglied (PH, V₂, AÜ₁/AÜ₂, STÜ₁/STÜ₂) zwischen einer Störstrahlungsquelle (A₁, A₅) und den übrigen Störstrahlungsquellen (A₂, A₃, A₄, A₆) eingeschaltet ist, die Verbindungen des wenigstens einen Phasendrehgliedes (PH, V₂, AÜ₁/AÜ₂, STÜ₁/STÜ₂) zu allen Störstrahlungsquellen (A₁, A₂, A₃, A₄, A₅, A₆) im Verhältnis zur Betriebswellenlänge kurz sind und das wenigstens eine Phasendrehglied (PH, V₂, AÜ₁/AÜ₂, STÜ₁/STÜ₂) die Phase um 180° dreht.

4. Hochfrequenzgerät nach einem der Asnprüche 1 bis 3, **dadurch gekennzeichnet, dass** die Schaltung so aufgebaut ist und/oder derartig ausgebildete und bemessene elektrische Bauteile aufweist, dass die Amplitude des Strahlungsvektors der einen Störstrahlungsquelle (A₁, A₅) und diejenige des resultierenden Strahlungsvektors der Störstrahlungsquellen (A₂, A₃, A₄, A₆) wenigstens annähernd gleich groß sind.

5. Hochfrequenzgerät nach einem der Ansprüche 1 bis 4, **dadurch gekennzeichnet, dass** das wenigstens eine Phasendrehglied ein auch für andere Zwecke vorgesehenes Schaltungsbauteil (V₂) ist.

6. Hochfrequenzgerät nach einem der Ansprüche 1 bis 5, **dadurch gekennzeichnet, dass** das wenigstens eine Phasendrehglied ein Breitbandübertrager (AÜ₁/AÜ₂, STÜ₁/STÜ₂) ist.

7. Hochfrequenzgerät nach einem der Ansprüche 3 bis 5, **dadurch gekennzeichnet, dass** das wenigstens eine Phasendrehglied ein Doppelrichtkoppler ist, der jeweils zwei Übertrager (SPÜ₁, STÜ₁ bzw. SPÜ₂, STÜ₂) aufweist, bei denen der Wicklungssinn derart gewählt ist, dass die Spannungen an den Anschlüssen (A₅, A₆) der beiden Nebenleitungen (NL₁, NL₂) gegenphasig sind.

8. Hochfrequenzgerät nach einem der Ansprüche 1 und 3 bis 5, **dadurch gekennzeichnet, dass** das wenigstens eine Phasendrehglied ein aktives Schaltungsbauteil (V₂) ist.

9. Hochfrequenzgerät nach Anspruch 8, **dadurch gekennzeichnet, dass** das aktive Schaltungsbauteil ein Verstärker (V₂) mit ungerader Stufenzahl oder zwei in der Phase um 180° versetzten Ausgängen ist.

10. Hochfrequenzgerät nach Anspruch 8, **dadurch gekennzeichnet, dass** das aktive Schaltungsbauteil in einem ASIC integriert ist.

## Claims

1. Radio-frequency apparatus (1, 2, 3, 4, 5) with at least two interference radiation sources (A₁, A₂, A₃, A₄, A₅, A₆),
**characterized in that** at least one phase-shifting element (PH, V₂, AÜ₁/AÜ₂, STÜ₁/STÜ₂) is provided, which shifts the phase of the radiation vector of an interference radiation source (A₁, A₅) in such a way that it is shifted in the centre of an operating frequency range through at least approximately 180° or an odd-numbered multiple thereof relative to the phase of the resulting radiation vector of the remaining interference radiation sources (A₂, A₃, A₄, A₆), and the phase-shifting element (PH, V₂, AÜ₁/AÜ₂, STÜ₁/STÜ₂) is broadband.

2. Radio-frequency apparatus according to Claim 1, **characterized in that** the at least one phase-shifting element is formed in adjustable or regulatable fashion.

3. Radio-frequency apparatus according to Claim 1, **characterized in that** the at least one phase-shifting element (PH, V₂, AÜ₁/AÜ₂, STÜ₁/STÜ₂) is connected in between an interference radiation source (A₁, A₅) and the remaining interference radiation sources (A₂, A₃, A₄, A₆), the connections between the at least one phase-shifting element (PH, V₂, AÜ₁/AÜ₂, STÜ₁/STÜ₂) and all the interference radiation sources (A₁, A₂, A₃, A₄, A₅, A₆) are short in relation to the operating wavelength, and the at least one phase-shifting element (PH, V₂, AÜ₁/AÜ₂, STÜ₁/STÜ₂) shifts the phase through 180°.

4. Radio-frequency apparatus according to one of Claims 1 to 3, **characterized in that** the circuit is constructed and/or has electrical components that are dimensioned and formed in such a way that the amplitude of the radiation vector of one interference radiation source (A₁, A₅) and that of the resulting radiation vector of the interference radiation sources (A₂, A₃, A₄, A₆) are at least approximately identical in magnitude.

5. Radio-frequency apparatus according to one of Claims 1 to 4, **characterized in that** the at least one phase-shifting element is a circuit component (V₂) that is also provided for other purposes.

6. Radio-frequency apparatus according to one of Claims 1 to 5, **characterized in that** the at least one phase-shifting element is a broadband transformer (AÜ₁/AÜ₂, STÜ₁/STÜ₂).

7. Radio-frequency apparatus according to one of Claims 3 to 5, **characterized in that** the at least one phase-shifting element is a double directional coupler which in each case has two transformers (SPÜ₁, STÜ₁ and SPÜ₂, STÜ₂) in which the winding sense is chosen in such a way that the voltages at the terminals (A₅, A₆) of the two secondary lines (NL₁, NL₂) are in antiphase.

8. Radio-frequency apparatus according to one of Claims 1 and 3 to 5, **characterized in that** the at least one phase-shifting element is an active circuit component (V₂).

9. Radio-frequency apparatus according to Claim 8, **characterized in that** the active circuit component is an amplifier (V₂) with an odd number of stages or two outputs that are phase-offset by 180°.

10. Radio-frequency apparatus according to Claim 8, **characterized in that** the active circuit component is integrated in an ASIC.

## Revendications

1. Appareil à haute fréquence (1, 2, 3, 4, 5) comprenant au moins deux sources de rayonnement parasite (A₁, A₂, A₃, A₄, A₅, A₆), **caractérisé en ce qu'**il est prévu au moins un déphaseur (PH, V₂, AÜ₁/AÜ₂, STÜ₁/STÜ₂) qui fait tourner la phase du vecteur de rayonnement d'une source de rayonnement parasite (A₁, A₅) de telle sorte qu'elle soit décalée au centre d'une plage de fréquences de fonctionnement d'au moins approximativement 180° ou d'un multiple impair de cette valeur par rapport à la phase du vecteur de rayonnement résultant des autres sources de rayonnement parasite (A₂, A₃, A₄, A₆) et le déphaseur (PH, V₂, AÜ₁/AÜ₂, STÜ₁/STÜ₂) est à large bande.

2. Appareil à haute fréquence selon la revendication 1, **caractérisé en ce qu'**au moins un déphaseur est réglable ou régulable.

3. Appareil à haute fréquence selon la revendication 1, **caractérisé en ce que** l'au moins un déphaseur (PH, V₂, AÜ_{1/}AÜ₂, STÜ₁/STÜ₂) est mis en circuit entre une source de rayonnement parasite (A₁, A₅) et les autres sources de rayonnement parasite (A₂, A₃, A₄, A₆), les liaisons de l'au moins un déphaseur (PH, V₂, AÜ₁/AÜ₂, STÜ₁/STÜ₂) avec toutes les sources de rayonnement parasite (A₁, A₂, A₃, A₄, A₅, A₆) sont relativement courtes par rapport à la longueur d'onde de fonctionnement et l'au moins un déphaseur (PH, V₂, AÜ₁/AÜ₂, STÜ₁/STÜ₂) tourne la phase de 180°.

4. Appareil à haute fréquence selon l'une des revendications 1 à 3, **caractérisé en ce que** le circuit est construit de telle sorte et/ou présente des composants électriques configurés et dimensionnés de telle sorte que l'amplitude du vecteur de rayonnement d'une source de rayonnement parasite (A₁, A₅) et celle du vecteur de rayonnement résultant des sources de rayonnement parasite (A₂, A₃, A₄, A₆) sont au moins approximativement égales.

5. Appareil à haute fréquence selon l'une des revendications 1 à 4, **caractérisé en ce que** l'au moins un déphaseur est un composant de commutation (V₂) également prévu à d'autres fins.

6. Appareil à haute fréquence selon l'une des revendications 1 à 5, **caractérisé en ce que** l'au moins un déphaseur est un transmetteur à large bande (AÜ₁/AÜ₂, STÜ₁/STÜ₂).

7. Appareil à haute fréquence selon l'une des revendications 3 à 5, **caractérisé en ce que** l'au moins un déphaseur est un double coupleur directionnel qui présente à chaque fois deux transmetteurs (SPÜ₁, STÜ₁ ou SPÜ₂, STÜ₂), dans lequel le sens des enroulements est choisi de telle sorte que les tensions au niveau des bornes (A₅, A₆) des deux lignes auxiliaires (NL₁, NL₂) sont en opposition de phase.

8. Appareil à haute fréquence selon l'une des revendications 1 et 3 à 5, **caractérisé en ce que** l'au moins un déphaseur est un composant de commutation actif (V₂) .

9. Appareil à haute fréquence selon la revendication 8, **caractérisé en ce que** le composant de commutation actif est un amplificateur (V₂) à nombre d'étages impair ou avec deux sorties déphasées de 180°.

10. Appareil à haute fréquence selon la revendication 8, **caractérisé en ce que** le composant de commutation actif est intégré dans un ASIC.
